# EUROPEAN PATENT APPLICATION

(11) **EP 1 819 001 A1**
(43) Date of publication of application: **15.08.2007**
(21) Application number: 06101433.8
(22) Date of filing: 09.02.2006
(51) Int. Cl.: H01M 2/38, H01M 10/42, H01M 10/06, H01M 10/12, H01M 4/76, H01M 10/14, H01M 4/68

(54) **Electric storage batteries with electrolyte agitation**

(71) Applicant: Amer-Sil S.A., 8287 Kehlen (LU)
(72) Inventor: LAMBERT, Urbain, 8323, Capellen (LU)
(74) Representative: Kihn, Pierre Emile Joseph

(57) **Abstract**

The present invention provides a gauntlet (4) for tubular type electric storage batteries with air mixing of the electrolyte, the gauntlet comprising multiple individual tubes forming a cartridge belt type gauntlet, wherein the walls of at least one of these individual tubes are substantially impermeable to air, as well as a process for its manufacture. The invention further pertains to an electric storage battery using such gauntlets.

## Description

### Technical field

The present invention generally relates to electric storage batteries, such as tubular type lead acid batteries, incorporating an air-bubbling electrolyte agitation device.

### Background Art

Lead acid batteries are widely used and include adjacent positive and negative electrodes immersed in an electrolyte and spaced by separators.

Lead-acid batteries of the tubular type are customarily constructed with tubular positive plates, constituent parts of which include: a grid member having a top bar; a post or burning lug and a plurality of current carrying spines, pencils of active material surrounding the current carrying spines; tubular bodies arranged to support and confine the pencils of active material and maintain such active mass in contact with the current carrying spines; and means for closing ends of the tubes.

The tubular bodies are required to provide a number of functions including: enclosure and support of the active material to maintain the active material in contact with the spines; maintenance of the dimensional stability of the pencils of active material particularly during periods of swelling of the active material; and, finally, provision of adequate communication between the electrolyte and the active material throughout the length of the tubular bodies.

From the early 1950s up to now, the tubular plate has evolved from the single tube design (PVC tubes and woven or braided tubes of C-glass fibers protected first by a perforated plastic armor, then by impregnation with phenolic resin) to the more economical and productive multitube gauntlet concept. The first generations of gauntlets, which are still in use, are made of woven polyester fabric impregnated with acrylic resin. Since the 1980s, the tubular gauntlet has further evolved to include modern non-woven fabrics.

The most widely used material used by the industry to produce non-woven gauntlets in which the positive active mass (lead dioxide) is inserted for the production of tubular positive plates of lead-acid batteries, is a point-bonded polyester spunbond material impregnated with acrylic resin. The aim of such an impregnation with phenolic, acrylic or styrene-butadiene resins is to further protect the fabric material from oxidation without substantially reducing its overall porosity

Industrial lead acid batteries, in most applications, are prone to electrolyte stratification:

During discharge, the PbO₂ from the positive plate is reduced into PbSO₄, taking sulfate ions from the sulfuric acid electrolyte, while Pb at the negative plate is oxidized into PbSO₄, also taking sulfate ions from the electrolyte.

During the recharge, on the contrary, the discharged positive and negative active materials PbSO₄ will be transformed back into PbO₂ at the positive plate and Pb at the negative plate. The surplus of current will be used for overcharging reactions to occur, namely water hydrolysis, i.e. oxygen evolution at the positive plate and hydrogen evolution at the negative plate.

As the current is not equally distributed from the top to the bottom of the plate, the efficiency of charging and especially discharging reactions may vary and lead to a sulfate concentration gradient in the electrolyte called "acid stratification", i.e. a non-homogeneous acid specific gravity within a cell.

The situation where the upper part of the plate is fully recharged, while the lower plate has difficulties to be efficiently recharged leads to longer charging times, higher overcharge factor and increased water decomposition at the upper part of the cell and further stratification.

In order to overcome this stratification, most of battery manufacturers use air bubbling to mix the electrolyte. Numerous different systems are known in the art for different types of batteries. Generally, a more or less complex plastic tubing is to be inserted at some stage of the manufacturing of the battery, then optionally attached or otherwise secured inside the battery and connected to a port, e.g. provided in the lid, which will be connected to a pressurized air supply when the battery is put into operation.

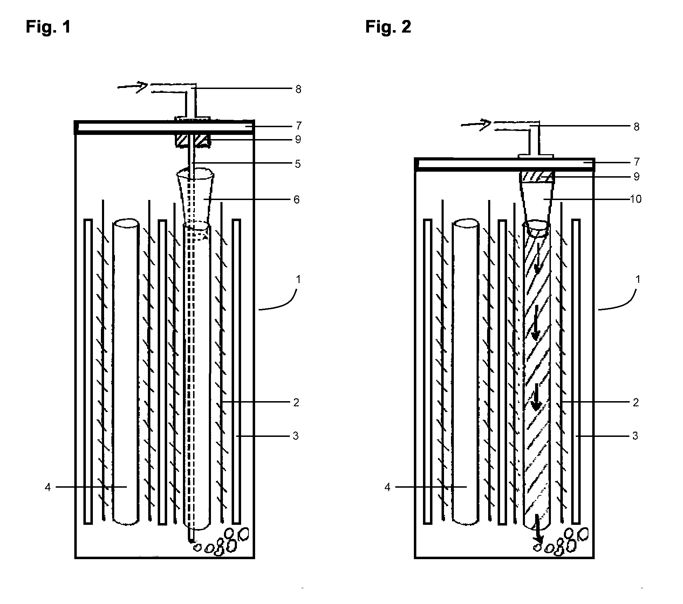

For tubular type batteries, one solution to prevent the need for extra space is to leave one of the outer tubes of one of the gauntlets empty (not filled with positive active mass) and to insert a long plastic tubing from the top to the bottom inside this empty tube (Figure 1). To facilitate this insertion of the long plastic tubing, a funnel shaped part acting as a guide is generally first placed on top of the empty gauntlet tube. The plastic tubing is then attached to a port in the lid of the cell, which port may be connected to an air-feeding device when the battery is put into operation. At regular interval, air is blown through the plastic tubing in order to mix up the sulfuric acid via air-bubbling and thus avoid electrolyte stratification.

As an example, the mixing of the electrolyte using air-bubbling can reduce the overcharge factor from 1.15% to 1.05%, thus leading to 10% to 15% higher recharge efficiency.

However, the use of such plastic tubing not only represents additional steps in the cell assembly process, as well as additional material costs, but also implies practical problems for the battery manufacturer, e.g. during insertion of the plastic tubing due to chocking inside the gauntlet tube.

### Technical problem

It is an object of the present invention to provide means to simplify the assembly of a tubular positive plate type battery, while providing efficient mixing of the electrolyte to prevent acid stratification.

### General Description of the Invention

In order to achieve this object, the present invention provides a multitube gauntlet for tubular type electric storage batteries, which gauntlet comprises multiple individual tubes thereby forming a cartridge belt type gauntlet, wherein the walls of at least one of these individual tubes are substantially impermeable to air.

Gauntlets are generally made from two sheets of fabric, which are attached together at regular intervals to form multiple, essentially parallel tubes. The (non-woven) fabric usually employed in their manufacture may be of any type known to the skilled person. Impregnation of the fibers of such (non-woven) fabrics may be used to further increase their resistance to oxidation, while preserving high porosity. Such an impregnation is achieved by a solution or suspension of a suitable resin, such as preferably an aqueous dispersion of acrylic type polymer particles with a solid content between 30 and 70%. Point-bonded polyester spunbond material impregnated with acrylic based resins is especially preferred. In fact, such fabrics are (and must remain) (micro)porous to permit the electrolyte solution to reach the active material. Hence, they are also permeable to air.

The present invention, by rendering one (or more if desired or needed) of these tubes impermeable to air using an impermeabilising agent, allows to directly use this tube instead of an additional plastic tubing, when connected to an air supply, to perform the mixing of the electrolyte solution by air-bubbling and thus efficiently prevent acid stratification. The major advantage for the battery manufacturer is a reduced number of assembly steps and fewer potential problems during assembly.

Air permeability is defined as the rate of airflow passing perpendicular through a known area under a prescribed air pressure differential between the two surfaces of a material. From this airflow rate, the air permeability of a fabric is obtained.

The expression "substantially impermeable to air" (and the simpler terms "impermeable" and "impervious" as used in the present document) means that the walls of such a tube are sufficiently airtight that air bubbles form at the lower end (outlet) of the gauntlet tube when applying air to its upper end (inlet) when used in a battery. In other words, although the walls need not to be completely impervious to air, they should however permit the bubbling through the lower opening of the gauntlet tube. Hence, this substantial (and sufficient) impermeability to air depends among others on the air pressure and rate applied, the length of the tube, i.e. the height of the battery.

As an example, the permeability to air of the walls of the at least one tube is less than 1 l/(cm².min) at a pressure of 2 bar, preferably less than 0.5 l/(cm².min).

Although any method to render the gauntlet fabric sufficiently impervious may be used to achieve this goal, in a preferred aspect of the invention, the walls of said gauntlet tube(s) are treated with an impermeabilising agent, e.g. coated with a hotmelt.

In fact, such a coating of one (or more) of the gauntlet tubes with a hotmelt collapses the pores of the fabric to such an extent that air can be directly blown through the tube (Figure 2), i.e. without the need of the additional internal plastic tubing (Figure 1).

Impermeabilising agents, which may be used to render fabrics impervious to air, are generally known to the skilled person in the art. In a preferred embodiment of the invention, hotmelts are used to this purpose. Hotmelts are solvent-free thermoplastic materials, which are applied in the melted state. In the present context, such hotmelts must be acid-resistant and they may generally be selected from thermoplastic polyolefin based polymers, e.g. polymers copolymers and block copolymers of ethylene, such as polyethylene, EVA (copolymer of ethylene and vinyl acetate), etc., of propylene, of styrene, etc., or mixtures thereof. Hence, in practice, their usability is further determined on one hand by the operating conditions inside the battery and on the other hand by the nature of and the compatibility with the gauntlet fabric used.

Although theoretically any one (or a plurality) of the tubes of the gauntlet may thus be impermeabilised, it is especially preferred for practical reasons, such as ease of assembly, design of the battery and in particular of the positive plate, that the one tube is an outer tube, i.e. the outermost tube on either side (or both sides if mixing is desired on both sides of the battery) of the cartridge belt type gauntlet.

A further advantage is the lack of additional securing means for such a mixing tube as the gauntlet itself is firmly held by the tubular plate, thereby further simplifying the assembly of the battery.

Hence, the use of gauntlets according to a preferred embodiment of the invention does not require actual modifications in the overall design and configuration of the battery itself. Furthermore, the process of assembly of the batteries will only need small adjustments by omitting previously needed steps to benefit from the present invention.

In a still further embodiment of the invention, the impermeabilised tube(s) is (are) marked with a distinctive label so as to ensure e.g. a correct orientation of the gauntlet inside the battery during assembly, e.g. by printing, stamping, etc, preferably by directly using a colored hotmelt as impermeabilising agent.

In a further aspect, the invention also provides a process for manufacturing multitube gauntlets for electric storage batteries, comprising the steps of:
- stacking two sheets of fabric,
- attaching the sheets at regular intervals to form individual parallel tubes
wherein the process further comprises the step of treating parts of the sheets of fabric relative to at least one of those tubes with an impermeabilising agent to render the walls of said at least one tube substantially impermeable to air.

The nature of the fabric, as well as of the impermeabilising agent are described above. The attachment of the sheets of fabric may be done by any appropriate method, such as stitching, sewing, gluing, thermobonding, etc.

It has to be noted that the treatment with the impermeabilising agent may be effected before, during or after the attachment of the sheets. If the treatment is done before the attachment of the sheets, the agent is applied on those parts of the sheets, which will form the substantially impermeable tube(s) after said attachment.

Furthermore, as the manufacturing process of such gauntlets generally also comprises a step of thermoforming the attached sheets after said attachment step, the impermeabilising treatment may be effected before, during or after this thermoforming, i.e. before or during said attachment, after the attachment but before the thermoforming, during the thermoforming or after the thermoforming. Preferably, the treatment with the impermeabilising agent is made on the flat product before thermoforming, but after the attachment of the sheets.

The impermeabilising treatment may be accomplished by any known means, such as coating, dipping, spraying, etc. In a preferred embodiment, a hotmelt is applied by a hotmelt applicator device on both external sides of one tube of the flat (not yet thermoformed) gauntlet.

As mentioned above, the gauntlets described herein are for use in an electric storage battery, such as preferably industrial, stationary or traction type lead acid battery.

Hence in a further aspect, the invention provides an electric storage battery comprising :
- a gauntlet as described above,
- a port for connecting to a pressurized air supply, and
- adapter means fluidly connecting said port to said at least one tube substantially impermeable to air.

The port will generally be located in the lid of the battery and will be connected to a pressurized air supply when putting the battery into operation, the pressurized air being provided continuously, intermittently at regular intervals or controlled via an electrolyte concentration measuring device.

The adapter means are used to fluidly connect the port to the upper end (inlet) of the impervious tube(s). Hence, their shape will depend on the relative location of the port, and of the inlet of the tube(s) and the number of tubes to be provided with pressurized air.

The fitting of the adapter means to the inlet of the tube and/or to the port may be achieved by any known means, such as gluing, squeezing, clipping, screwing, shrink-fitting, etc.

In a preferred embodiment, the adapter means comprise an inlet fitted to said port and at least one tapered outlet tight-fitting into the at least one tube substantially impermeable to air.

Hence, in their most simple configuration using one impervious tube per port for the mixing of the electrolyte, the adapter means have roughly cylindrical to conical shape with a tapered end for insertion and tight-fitting inside said impervious tube.

It has to be noted that if more than one gauntlet is to be used in a cell, not all gauntlets must incorporate impervious tubes. Often, one impervious tube (in a gauntlet according to the invention) per cell will be sufficient to effect the mixing of the electrolyte.

Conversely, if one port is to provide more than one impervious tube (possibly on different gauntlets) with pressurized air, the adapter means will act as a distributor whose shape will of course depend on the number of impervious tubes to be connected and their relative locations inside the cell, as will be easily understood by the skilled person.

The adapter means may be fitted to the port and the gauntlet during battery assembly, they may also be pre-fitted either to the gauntlet or to the port provided in the lid or they may be integral part of the lid, i.e. formed (e.g. by injection molding) during manufacturing of the battery lid.

Hence a still further aspect of the invention is a battery lid comprising a port for connecting to a pressurized air supply, and adapter means for fluidly connecting said port to at least one tube substantially impermeable to air of a gauntlet as previously described, wherein the adapter means are an integral part of said lid, i.e. are formed in one piece with the lid, e.g. by injection molding.

### Brief Description of the Drawings

A preferred embodiment of the invention will now be described, by way of example, with reference to the accompanying drawings in which:
Fig. 1 represents a known electrolyte mixing device with a plastic tubing inserted in one of the outer tubes of one of the tubular positive plates (prior art);
Fig. 2 shows an embodiment of the present invention without need of such additional plastic tubing. Air is directly blown through an outer tube of the gauntlet, this tube being fully coated or impregnated with hotmelt;
Fig. 3 shows a hotmelt application system useful for the manufacture of the present gauntlets; and
Fig. 4 is a view of a gauntlet with one of its outer tubes fully impregnated with hotmelt.

Further details and advantages of the present invention will become apparent from the following detailed description of not limiting embodiments with reference to the attached drawings.

### Description of Preferred Embodiments

In Figure 1, a prior art battery housing (1) closed with a lid (7) encloses negative plates (3) and positive tubular plates (not represented) inside a gauntlet (4), negative and positive plates being kept apart by separators (2). One of the tubes of the gauntlet does not contain active material, but a plastic tubing (5) inserted in this tube provided with an insertion guide (6) to facilitate the insertion of the plastic tubing during assembly. The plastic tubing (5) is connected to a port (9) provided in the lid (7) connected to an air supply (8).

Figure 2 represents a battery according to an embodiment of the invention having a simpler design (same numerals as in Fig.1 refer to same or equivalent features). Adapter (10) is connected to (or is integral part of) the port (9) and is fitted to the upper end (inlet) of the impervious tube, this tube being firmly secured by the adjacent positive plates (not represented).

The process to manufacture non-woven (cartridge-belt type) gauntlets consists in joining two strips of polyester non-woven fabric at predetermined intervals, e.g. with a multi-needles sewing machine, then thermoforming the multitube panel into the desired tube geometry. The thermoforming may be made in an oven by inserting hot rods in-between both fabric layers, between each two adjacent sewing lines.

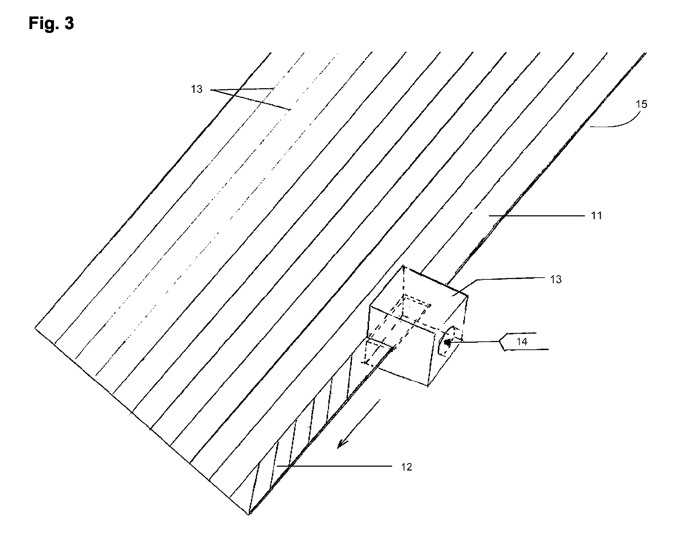

According to a preferred embodiment of the present invention, a hotmelt (14) is applied all along the outer tube (12), as shown in Figure 3. In this Figure, the application device is fixed and the gauntlet is moved along the direction indicated by the arrow. This application or treatment can be done at any step of the process: before, during or after the sewing operation, before, during or after the thermoformation. Preferably, the application is made on the flat gauntlet (15) before thermoformation, using a hotmelt applicator (13).

The hotmelts usable are thermoplastic polyolefins, for example Lunatack^{®} PHC 7570 from H.B. Fuller.

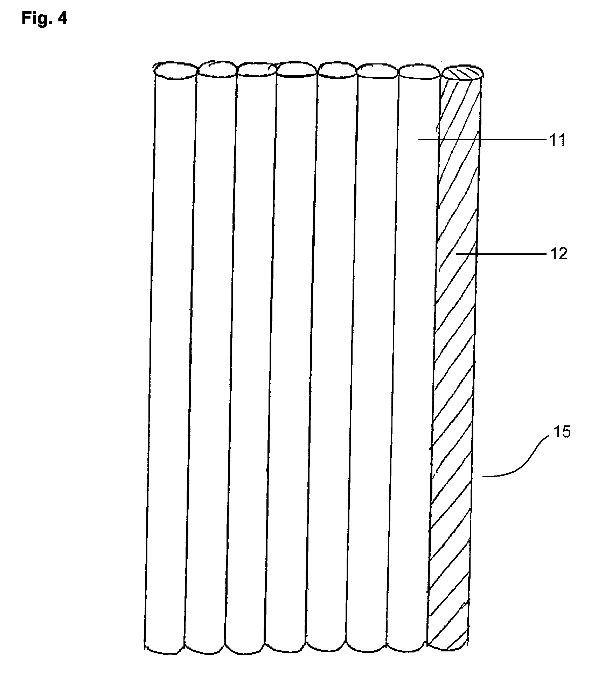

Figure 4 presents a typical gauntlet ready for use, i.e. thermoformed with one impermeabilised tube optionally having a distinct color (highlighted in Fig 4).

### Examples

Air permeability measurements of typical non-woven fabric

Permeability measurements have been performed according to two different methods (Franck or Coulter) on Fabric A. The results in Table 1 below show typical air permeability values of a non-woven polyester fabric used for the manufacture of gauntlets before any treatment with an impermeabilising agent.

**Table 1: Air permeability of a spunbond non-woven polyester fabric before treatment**

| | **Fabric A** | | |
|---|---|---|---|
| | FRANK | COULTER POROMETER II | |
| | test area: 20 cm² | test area: 4,9 cm² | |
| measure No. | air permeability l/m²s | test flow l/min | permeability l/min.cm² |
| 1 | 880 | 88,13 | 40,23 |
| 2 | 900 | 88,76 | 40,52 |
| 3 | 990 | 92,27 | 42,12 |
| 4 | 1200 | 92,16 | 42,07 |
| 5 | 900 | 88,22 | 40,27 |
| 6 | 1120 | 89,77 | 40,98 |

| | | | |
|---|---|---|---|
| Test Pressure = 0,2 bar | | | |

Gauntlets with Fabric A

The results in Table 2 below show the variable efficiency of different hotmelts. While Hotmelt 1 is able to efficiently reduce the fabric permeability just after application, Hotmelt 2 is only fully efficient after thermoforming, while Hotmelt 3 is not able to provide sufficient impermeability to the fabric.

**Table 2: Air permeability of a spunbond non-woven polyester fabric after treatment**

| | test pressure bar | test flow l/min | permeability l/min.cm² | test pressure bar | test flow l/min | permeability l/min.cm² |
|---|---|---|---|---|---|---|
| Insulated tube | | | | | | |
| Hotmelt 1 before thermoforming | 2 | 0,101 | 0,046 | 3,5 | 0,112 | 0,051 |
| Hotmelt 1 after thermoforming | 2 | 0 | 0 | 3,5 | 0 | 0 |
| Hotmelt 2 before thermoforming | 2 | 18,48 | 8,438 | 3,5 | 31,86 | 14,54 |
| Hotmelt 2 after thermoforming | 2 | 0,037 | 0,017 | 3,5 | 0,032 | 0,014 |
| Hotmelt 3 before thermoforming | 2 | 85,32 | 38,95 | / | / | / |
| Hotmelt 3 after thermoforming | 2 | 85,32 | 38,95 | / | / | / |

## Claims

1. A gauntlet for tubular type electric storage batteries comprising multiple individual tubes forming a cartridge belt type gauntlet,
**characterized in that**
the walls of at least one of these individual tubes are substantially impermeable to air.

2. The gauntlet according to claim 1, wherein the permeability to air of the at least one tube is less than 1 l/(cm².min) at a pressure of 2 bar.

3. The gauntlet according to any of the preceding claims, wherein the walls of the at least one tube are coated or impregnated with a hotmelt.

4. The gauntlet according to claim 3, wherein the hotmelt is chosen from polymers, copolymers and block copolymers of ethylene, of propylene, of styrene, or mixtures thereof.

5. The gauntlet according to any of the preceding claims, wherein the at least one tube is an outer tube.

6. The gauntlet according to any of the preceding claims, wherein the at least one tube is marked with a distinctive color.

7. The gauntlet according to any of the preceding claims, wherein the electric storage battery is an industrial, stationary or traction type lead acid battery.

8. Use of a gauntlet according to any of claims 1 to 7 in a lead acid battery.

9. A process for manufacturing multitube gauntlets for electric storage batteries, comprising the steps of:
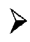 stacking two sheets of fabric,
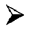 attaching the sheets at regular intervals to form individual parallel tubes
**characterized in that**
the process further comprises the step of treating parts of the sheets of fabric relative to at least one of those tubes with an impermeabilising agent to render the walls of said at least one tube substantially impermeable to air.

10. The process according to claim 9, wherein it further comprises the step of thermoforming the attached sheets after said attachment step and before, during or after the treatment with the impermeabilising agent.

11. A battery lid comprising
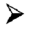 a port for connecting to a pressurized air supply, and
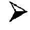 adapter means for fluidly connecting said port to at least one tube substantially impermeable to air of a gauntlet according to any of claims 1 to 7,
wherein the port and the adapter means form an integral part of said lid.

12. An electric storage battery comprising
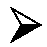 a gauntlet having at least one tube substantially impermeable to air according to any of claims 1 to 7,
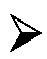 a port for connecting to a pressurized air supply, and
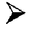 adapter means fluidly connecting said port to said at least one tube substantially impermeable to air.

13. The electric storage battery according to claim 12, wherein the adapter means comprise an inlet fitted to said port and at least one tapered outlet tight-fitting into the at least one tube substantially impermeable to air.

14. The electric storage battery according to any of claims 12 to 13, wherein the port and the adapter means are integral part of a battery lid according to claim 11.

15. The electric storage battery according to any of claims 12 to 14, wherein the battery is an industrial, stationary or traction type lead acid battery.
